# EUROPÄISCHE PATENTSCHRIFT

(11) **EP 1 984 167 B1**
(45) Veröffentlichungstag und Bekanntmachung des Hinweises auf die Patenterteilung: **11.03.2015**
(21) Anmeldenummer: 07711178.9
(22) Anmeldetag: 09.02.2007
(51) Int. Cl.: B29C 73/02

(54) **VERFAHREN ZUR REPARATUR DER OBERFLÄCHE EINER SCHALPLATTE**
METHOD OF REPAIRING THE SURFACE OF A FORMWORK PANEL
PROCÉDÉ POUR RÉPARER LA SURFACE D'UN PANNEAU DE COFFRAGE

(30) Priorität: 13.02.2006 DE 102006006408
(43) Veröffentlichungstag der Anmeldung: 29.10.2008
(73) Patentinhaber: Alkus GmbH & Co. KG, 09599 Freiberg (DE)
(72) Erfinder: DINGLER, Gerhard, 72221 Haiterbach (DE)
(74) Vertreter: Späth, Dieter
(86) Internationale Anmeldenummer: PCT/DE2007/000262
(87) Internationale Veröffentlichungsnummer: WO 2007/093158

(56) Entgegenhaltungen:
- WO-A-2005/042251
- DE-A1- 10 114 161
- DE-A1- 10 128 549
- FR-A1- 2 626 034

## Beschreibung

Die Erfindung betrifft ein Verfahren zur Reparatur der Oberfläche einer Schalplatte mit den Merkmalen des Oberbegriffs des Anspruchs 1. Die Erfindung ist insbesondere zur Reparatur von Kunststoffschalplatten oder von Schalplatten mit einer Kunststoffoberfläche auf der Schalseite vorgesehen.

Aus der DE 197 24 361 A1 ist ein plattenförmiges Bauelement bekannt, das als Schalplatte verwendbar ist. Das bekannte Bauelement ist eine Schichtverbundplatte mit einem plattenförmigen Kern aus einem geschäumten Kunststoff, auf den beidseitig eine Verstärkungsschicht beispielsweise aus einer Metallfolie aufgebracht ist, die mit einer Deckschicht aus Kunststoff überzogen ist.

Beim Handhaben einer Schalplatte und beim Schalen von Beton wird die Oberfläche der Schalplatte mit der Zeit beschädigt, sie bekommt Kratzer und dgl. Vertiefungen. Das hat zur Folge, dass die Oberfläche des Betons ein verschlechtertes Sichtbild aufweist.

Die Offenlegungsschrift DE 101 28 549 A1 offenbart eine durch Erwärmen geschmolzene Rezyklatmasse zur Oberflächenreparatur auf eine Schaltafel aufzubringen. Vor der Reparatur wird die Schaltafel von einer Trennschicht (Lack, Wachs) befreit.

Die Offenlegungsschrift DE 101 14 161 A1 offenbart, auf eine Schaltafel eine Schalungsfolie aufzukleben. Die Schalungsfolie schützt die Schaltafel vor Beschädigung durch Betonieren. Ist die Schalungsfolie beschädigt, wird sie abgezogen und es wird eine neue Schalungsfolie aufgebracht.

Auch die Internationale Patentanmeldung WO 2005/042251 A1 sieht vor, eine Schalungsfolie von einer Schaltafel abzuziehen, wenn sie durch Betonieren beschädigt ist, und durch eine neue Schalungsfolie zu ersetzen.

Der Erfindung liegt die Aufgabe zu Grunde, ein Verfahren zur Reparatur der Oberfläche einer Schalplatte vorzuschlagen.

Diese Aufgabe wird erfindungsgemäß durch die Merkmale des Anspruchs 1 gelöst. Die Oberflächenschicht der Schalplatte, die eine Schichtverbundplatte ist, wird erfindungsgemäß nicht nach Art einer Folie von der Schalplatte abgezogen, sondern sie wird zerstörend entfernt. Dabei sieht die Erfindung vor, eine Außenschicht der Schichtverbundplatte nicht insgesamt zu entfernen, sondern nur einen Teil ihrer Dicke. Kratzer und dgl. Vertiefungen in der Oberfläche der Schalplatte werden entfernt, wenn die Dicke der entfernten Oberflächenschicht mindestens so groß wie die Kratzer oder dgl. tief ist. Sind die Vertiefungen tiefer, muss entweder eine dickere Oberflächenschicht von der Schalplatte entfernt oder es müssen die Vertiefungen werkstoffgerecht gefüllt werden beispielsweise durch Auftrag- bzw. Füllschweissen mit Kunststoff. Das Füllen der Vertiefungen kann vor dem Entfernen der Oberflächenschicht von der Schalplatte erfolgen. Beim Entfernen der Oberflächenschicht sind die gefüllten Stellen dann automatisch bündig mit der übrigen Oberfläche. Es muss jedoch vor dem Füllen festgestellt werden, welche Vertiefungen in der Oberfläche so tief sind, dass sie gefüllt werden müssen. Die Vertiefungen in der Oberfläche können auch nach Entfernen der Oberflächenschicht gefüllt werden, sie müssen dann beispielsweise durch Abziehen, Fräsen oder Schleifen glatt und bündig mit der Oberfläche der Schalplatte gemacht werden. Durch das Entfernen der Oberflächenschicht wird eine Oberflächengüte der Schalplatte verbessert. Mit Oberflächengüte sind insbesondere Glätte und/oder Ebenheit der Oberfläche der Schalplatte gemeint. Vertiefungen in der Oberfläche verschwinden oder zumindest ihre Tiefe verringert sich. Ein weiterer Vorteil des Entfernens der Oberflächenschicht ist eine Haftvermittlung für die nachfolgende Beschichtung der Schalplatte. Ein zum Betonieren aufgetragenes Trennmittel, beispielsweise Schalöl, wird entfernt. Eine haftvermittelnde Oberflächenbehandlung für die nachfolgende Beschichtung wie beispielsweise eine Primer-, Corona- oder Plasmabehandlung können u. U. entfallen.

Anschließend wird die Schalplatte wieder beschichtet und ist erneut einsetzbar. Durch die Beschichtung wird eine weitere Verbesserung der Oberflächengüte der Schalplatte erreicht, sofern durch das Entfernen der Oberflächenschicht nicht alle Oberflächenfehler vollständig beseitigt worden sind. Mit dem erfindungsgemäßen Verfahren ist eine Reparatur einer Schalplatte möglich, die deren Oberfläche verbessert. Insbesondere erhält die Oberfläche die gleiche Güte wie bei einer neuen Schalplatte. Das Verfahren lässt sich mehrmals an einer Schalplatte durchführen. Die Verwendbarkeit der Schalplatte insbesondere zum Betonieren von Sichtbeton lässt sich dadurch um ein Mehrfaches verlängern.

Eine Ausgestaltung der Erfindung sieht ein spanendes Entfernen der Oberflächenschicht vor. Das Spanen kann mit geometrisch bestimmter Schneide, beispielsweise durch Fräsen, oder mit geometrisch unbestimmter Schneide, beispielsweise durch Schleifen, erfolgen. Eine andere Möglichkeit zum zerstörenden und damit die Oberflächengüte verbessernden Entfernen der Oberflächenschicht ist beispielsweise das Lasern. Auch ein Abtragen, beispielsweise ein thermisches, chemisches oder elektrochemisches Abtragen, kommt zum Entfernen der Oberflächenschicht in Betracht. Das zerstörende, insbesondere spanende Entfernen einer Oberflächenschicht mit bestimmter Schichtdicke hat den Vorteil der Verbesserung der Oberflächengüte, da Vertiefungen in der Oberfläche verschwinden oder zumindest ihre Tiefe verringert wird.

Auch die anschließende Beschichtung der Oberfläche erfolgt vorzugsweise so, dass sie verbliebene Oberflächenfehler ausgleicht. Der Auftrag der Beschichtung erfolgt vorzugsweise so, dass Vertiefungen ausgefüllt werden und die neue Oberfläche frei von Vertiefungen ist. Grundsätzlich ist auch eine Beschichtung mit einer Oberflächenstruktur anstelle einer glatten Oberfläche möglich und denkbar, die beim Betonieren ein Abbild in den Beton formt.

Eine Ausgestaltung der Erfindung sieht vor, dass die Schalplatte oder jedenfalls ihre Oberfläche einen Kunststoff, insbesondere ein Thermoplast, aufweist. Mit Oberfläche ist die mit Beton in Berührung kommende, zu reparierende Schaloberfläche gemeint. Auch zur Beschichtung sieht eine Ausgestaltung der Erfindung ein Thermoplast vor.

In bevorzugter Ausgestaltung der Erfindung wird eine Oberflächenschicht entfernt, deren Dicke gleich groß wie die Dicke der Neubeschichtung ist. Dadurch ändert die Reparatur die Gesamtdicke der Schalplatte nicht, die Oberfläche der Schalplatte hat nach der Reparatur die gleiche Lage, beispielsweise in Bezug auf einen Rahmen der Schalplatte wie vor der Reparatur.

Die Beschichtung kann erfindungsgemäß flüssig, beispielsweise wie ein Lack, durch Spritzen, beispielsweise nach Art einer Pulverbeschichtung oder Spritzlackierung, oder durch Gießen erfolgen. Die Aufzählung ist nicht abschließend. Zur Beschleunigung der Aushärtung oder zur Erhöhung der Festigkeit kann die Beschichtung erwärmt werden, was auch als "Einbrennen" oder "thermisch forcierte Trocknung" bezeichnet wird. Die Beschichtung weist gemäß einer Ausgestaltung der Erfindung eine niedrigere Schmelztemperatur als die Schalplatte oder zumindest deren oberflächennaher Bereich auf. Die Temperaturdifferenz muss ausreichend groß sein, um eine thermische Beschädigung der Schalplatte beim Schmelzen der Beschichtung zu vermeiden. Die Schmelztemperatur der Beschichtung beträgt beispielsweise 130 °C und die Schalplatte, die ein Thermoplast aufweist, weist eine Schmelztemperatur von etwa 220 °C und eine Erweichungstemperatur von etwa 160 °C auf. Für eine gute Haftung der Beschichtung ist eine Aktivierung durch Erweichung der Schalplatte zumindest an der Oberfläche als günstig anzusehen. Weist die Schalplatte ein Duroplast auf, ist dessen Zersetzungstemperatur anstelle der Schmelztemperatur maßgeblich, wobei als Zersetzungstemperatur die Temperatur anzusehen ist, bei der der Duroplast zerstört wird.

Eine Ausgestaltung der Erfindung sieht vor, dass die Schalplatte einen Rahmen aufweist, in dem die Schalplatte zur Reparatur verbleibt. Derartige Rahmen sind für Schalplatten zur Betonschalung üblich, sie versteifen die Schalplatte und ermöglichen das Zusammensetzen und Aufstellen von Schalplatten zu einer Schalung. Teilweise wird auch die Schalplatte mit dem Rahmen insgesamt als Schalplatte bezeichnet. Das Belassen der Schalplatte im Rahmen während der Reparatur verringert den Reparaturaufwand erheblich. Außerdem vereinfacht der Rahmen ein automatisiertes Handhaben der Schalplatte während der Reparatur, weil er Befestigungseinrichtungen aufweist, die zum Verbinden mit Rahmen weiterer Schalplatten oder zum Befestigen von Stützen vorgesehen sind, an denen sich die Schalplatte maschinell greifen und halten lässt.

Eine Ausgestaltung der Erfindung sieht vor, dass die Beschichtung der Schalplatte bündig zum Rahmen erfolgt. Des Weiteren ist es von Vorteil, wenn ein evtl. zwischen der Schalplatte und dem Rahmen vorhandener Spalt durch die Beschichtung geschlossen wird, so dass ein nahtloser Übergang vom Rahmen zu der mit ihm auf der Schalungsseite bündigen Schalplatte erfolgt. Relativbewegungen zwischen dem Rahmen und der Schalplatte, beispielsweise in Folge von Temperaturdehnungen oder durch mechanische Beanspruchung, gleicht die Beschichtung durch ihre Elastizität aus.

Weitere Merkmale der Erfindung ergeben sich aus der folgenden Beschreibung der Ausführungsbeispiele in Verbindung mit den Ansprüchen und der Zeichnung. Einzelne Merkmale können je für sich oder zu mehreren bei Ausführungsformen der Erfindung verwirklicht sein.

Die Erfindung wird nachfolgend anhand in der Zeichnung dargestellter Ausführungsbeispiele näher erläutert. Die Figuren zeigen Verfahrensschritte zweier Ausführungsbeispiele des erfindungsgemäßen Verfahrens.

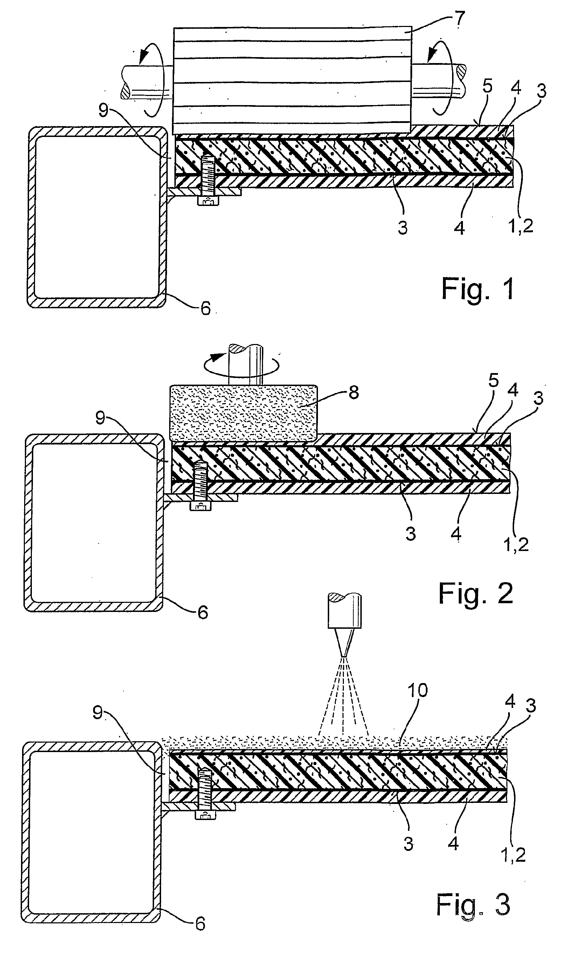

Figur 1 zeigt eine Schalplatte 1, die in einem Rahmen 6 befestigt ist. Die Schalplatte 1 ist eine Schichtverbundplatte mit einem Kern 2, der aus einem geschäumten Polypropylen besteht, auf den beidseitig Aluminiumfolien 3 als Verstärkungsschichten aufgebracht sind, auf die Außenschichten 4 aus ungeschäumtem Polypropylen aufgebracht sind. Die Zeichnung ist nicht maßstabsgetreu. Der Rahmen 6 ist ein Metallrahmen, beispielsweise aus Stahl oder einer Aluminiumlegierung. Eine Schaloberfläche 5 der Schalplatte 1 ist bündig mit dem Rahmen 2.

Durch den Gebrauch beim Schalen und Betonieren wird die Schalplatte 1 beschädigt, ihre Schaloberfläche 5 erhält Kratzer und dgl. Vertiefungen, die durch das erfindungsgemäße Verfahren beseitigt werden. Dazu wird eine Oberflächenschicht der Schaloberfläche 5 entfernt. Das Entfernen der Oberflächenschicht erfolgt in dem in Figur 1 dargestellten Ausführungsbeispiel durch Fräsen mit einem Fräser 7 und in dem in Figur 2 dargestellten Ausführungsbeispiel durch Schleifen mit einem Schleifkörper 8. Beides sind spanabhebende Verfahren, das Fräsen mit geometrisch bestimmter Schneide, das Schleifen mit geometrisch unbestimmter Schneide. Auch andere Verfahren zum Entfernen der Oberflächenschicht wie beispielsweise thermisches, chemisches oder elektrochemisches Abtragen sind anwendbar. Es wird nur ein Teil der Dicke der Außenschicht 4 entfernt, so dass die Verstärkungsschicht 3 nicht beschädigt wird. Kratzer und Vertiefungen mit einer Tiefe von nicht mehr als der Dicke der entfernten Oberflächenschicht werden dadurch entfernt. Die Schalplatte 1 hat eine ebene, beispielsweise gefräste oder geschliffene Oberfläche, die gleichmäßig um die Dicke der entfernten Oberflächenschicht tiefer als der Rahmen 2 liegt. Tiefere Beschädigungen müssen repariert, d. h. werkstoffgerecht, beispielsweise durch Kunststoffschweissen eben mit der gefrästen oder geschliffenen Oberfläche gefüllt werden, sofern sie nicht durch die nachfolgende und noch zu beschreibende Beschichtung ausgeglichen werden. Die Fräs- bzw. Schleiftiefe ist in Figuren 1 und 2 übertrieben stark dargestellt, es kann genügen, weniger als ½ der Dicke der Außenschicht 4 zu entfernen.

Durch die spanende, d. h. mechanische Bearbeitung wird die Schaloberfläche 5 zur nachfolgenden Beschichtung vorbehandelt bzw. vorbereitet. Ein zum Betonieren auf die Schalplatte 1 aufgebrachtes Trennmittel, beispielsweise Schalöl, das in die Oberfläche der Außenschicht 4 eingedrungen sein kann, wird mit der Oberflächenschicht entfernt. Die mechanische Bearbeitung verbessert die Haftung der nachfolgenden Beschichtung durch Aufrauung der Schaloberfläche 5. Die Haftung lässt sich auch durch Abtragsverfahren, evtl. durch eine Wärmebehandlung, eine Laserbearbeitung der Oberfläche nach dem Entfernen der Oberflächenschicht oder auch ein Abtragen der Oberflächenschicht mittels Laser usw. erreichen. Eine ansonsten erforderliche Vorbehandlung zur Haftvermittlung für die nachfolgende Beschichtung wie beispielsweise eine Primer-, Corona- oder Plasmavorbehandlung können dadurch bei Ausführungsformen der Erfindung entfallen.

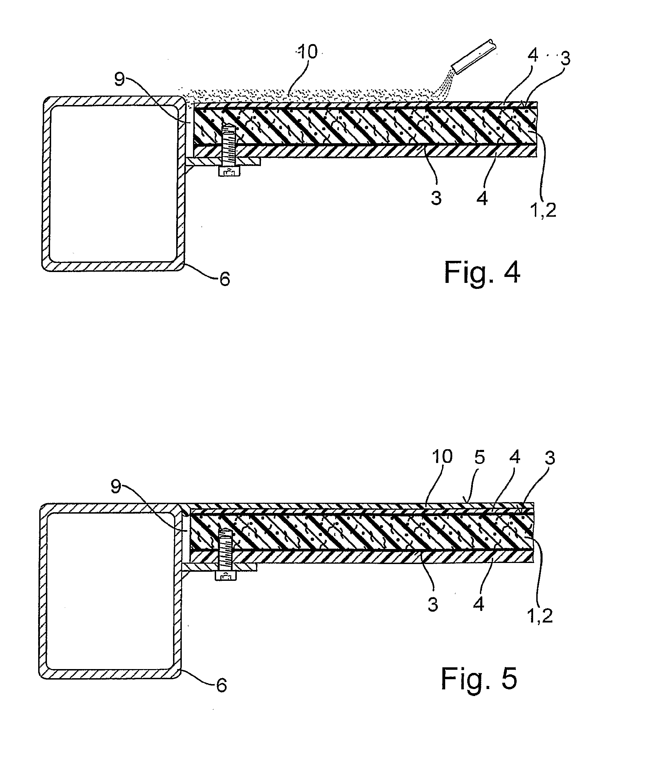

Nach dem Entfernen der Oberflächenschicht und einem eventuellen Füllen tieferer, nicht entfernter Vertiefungen wird die Schaloberfläche 5 der Schalplatte 1 neu beschichtet. Es erfolgt beispielsweise eine Pulverbeschichtung (Figur 3) oder der Auftrag einer flüssigen Beschichtung 10 (Figur 4). In Figur 3 erfolgt die Beschichtung mit einem Polypropylen. Die Beschichtung 10 weist eine niedrigere Schmelztemperatur als die Schalplatte 1 auf. Das Polypropylen des Kerns 2 und der Außenschichten 4 der Schalplatte 1 weisen eine Erweichungstemperatur von etwa 160 °C auf. Die Beschichtung 10 weist dagegen eine Schmelztemperatur von etwa 130 °C auf. Durch Erwärmen auf die Schmelztemperatur der Beschichtung 10 wird die Beschichtung 10 geschmolzen und verbindet sich beim Aushärten stoffschlüssig mit der Außenschicht 4 der Schalplatte 1. Unebenheiten werden ausgeglichen, die Schalplatte 1 erhält eine ebene Schaloberfläche 5. Es kann bis etwa zur Erweichungstemperatur der Außenschichten 4 der Schalplatte 1 erwärmt werden, um deren Oberflächen zu aktivieren und die Haftung der Beschichtung 10 zu verbessern. Die Beschichtung 10 wird mit einer Dicke aufgetragen, so dass sie nach dem Schmelzen und Abkühlen die Dicke der entfernten Oberflächenschicht hat. Nach dem Schmelzen und Abkühlen ist die Schaloberfläche 5 wieder wie ursprünglich bündig mit dem Rahmen 6 (Figur 5). Die Beschichtung 10 füllt einen Spalt 9 zwischen der Schalplatte 1 und dem Rahmen 6 aus.

In Figur 4 wird ein flüssiger 2-Komponenten-Lack als Beschichtung 10 auf die horizontal ausgerichtete Schalplatte 1 aufgetragen und bei erhöhter Temperatur, die die Oberfläche der Außenschicht 4 der Schalplatte aktiviert, ausgehärtet. Der flüssig aufgetragene Lack gleicht Unebenheiten der horizontal liegenden Schalplatte 1 aus.

Ein Spalt 9 zwischen der Schalplatte 1 und dem Rahmen 6 ermöglicht einen Überstand des Fräsers 7 bzw. des Schleifkörpers 8 über den Rand der Schalplatte 1 ohne in Berührung mit dem Rahmen 6 zu kommen und diesen zu beschädigen. Auch wird eine Beschädigung oder ein schneller Verschleiß des Fräsers 7 bzw. des Schleifkörpers 8 vermieden, wenn er nicht mit dem Rahmen 6, der aus Stahl bestehen kann, in Berührung kommt. Durch den Überstand des Werkzeugs 7, 8 über den Rand der Schalplatte 1 ist ein zuverlässiges Entfernen der Oberflächenschicht bis zum Rand der Schalplatte 1 sichergestellt.

## Patentansprüche

1. Verfahren zur Reparatur der Oberfläche (5) einer Schalplatte (1), die eine Schichtverbundplatte ist, **gekennzeichnet durch** die Schritte
- zerstörendes Entfernen eines Teils einer Dicke einer Außenschicht (4) der Schichtverbund-Schalplatte (1), und
- Neubeschichten der Schalplatte (1).

2. Verfahren nach Anspruch 1, **dadurch gekennzeichnet, dass** eine Oberflächengüte der Schalplatte (1) durch das Entfernen der Oberflächenschicht verbessert wird.

3. Verfahren nach Anspruch 1 oder 2, **dadurch gekennzeichnet, dass** die Oberflächenschicht spanend entfernt wird.

4. Verfahren nach einem der Ansprüche 1 bis 3, **dadurch gekennzeichnet, dass** die Beschichtung (10) Oberflächenfehler der Schalplatte (1) ausgleicht.

5. Verfahren nach einem der Ansprüche 1 bis 4, **dadurch gekennzeichnet, dass** die Schalplatte (1) eine Oberfläche aus Kunststoff, insbesondere aus einem Thermoplast, aufweist.

6. Verfahren nach einem der vorhergehenden Ansprüche, **dadurch gekennzeichnet, dass** die Beschichtung (10) mit einem Thermoplast erfolgt.

7. Verfahren nach einem der vorhergehenden Ansprüche, **dadurch gekennzeichnet, dass** die Dicke der entfernten Oberflächenschicht gleich wie die Dicke der Neubeschichtung (10) ist.

8. Verfahren nach einem der vorhergehenden Ansprüche, **dadurch gekennzeichnet, dass** die Beschichtung durch Spritzen oder Gießen erfolgt.

9. Verfahren nach einem der vorhergehenden Ansprüche, **dadurch gekennzeichnet, dass** die Beschichtung als flüssiger Lackauftrag erfolgt.

10. Verfahren nach einem der vorhergehenden Ansprüche, **dadurch gekennzeichnet, dass** die Beschichtung (10) eine niedrigere Schmelztemperatur aufweist als die Schalplatte (1) oder zumindest deren Oberfläche.

11. Verfahren nach einem der vorhergehenden Ansprüche, **dadurch gekennzeichnet, dass** die Beschichtung (10) mit einer Temperatur erfolgt, die die Oberfläche der Schalplatte (1) aktiviert.

12. Verfahren nach einem der vorhergehenden Ansprüche, **dadurch gekennzeichnet, dass** die Beschichtung (10) sich stoffschlüssig mit der Schalplatte (1) verbindet.

13. Verfahren nach einem der vorhergehenden Ansprüche, **dadurch gekennzeichnet, dass** die Schalplatte (1) einen Rahmen (6) aufweist und dass die Schalplatte (1) zur Reparatur im Rahmen (6) verbleibt.

14. Verfahren nach einem der vorhergehenden Ansprüche, **dadurch gekennzeichnet, dass** die Schalplatte (1) einen Rahmen (6) aufweist und dass die Beschichtung (10) bündig zum Rahmen (6) erfolgt und ein eventueller Spalt (9) zwischen der Schalplatte (1) und dem Rahmen (6) mit der Beschichtung (10) geschlossen wird.

## Claims

1. A method of repairing the surface (5) of a formwork panel (1), which is a composite laminated panel, **characterised by** the steps of
- destructively removing a proportion of a thickness of an outer layer (4) of the composite laminated formwork panel (1), and
- providing a new coating on the formwork panel (1).

2. A method as claimed in claim 1, **characterised in that** a surface quality of the formwork panel (1) is improved by the removal of the surface layer.

3. A method as claimed in claim 1 or 2, **characterised in that** the surface layer is removed by machining.

4. A method as claimed as claimed in one of claims 1 to 3, **characterised in that** the coating (10) evens up surface defects on the formwork panel (1).

5. A method as claimed as claimed in one of claims 1 to 4, **characterised in that** the formwork panel (1) has a surface of plastic material, particularly of a thermoplastic material.

6. A method as claimed in one of the preceding claims, **characterised in that** the coating (10) is effected with a thermoplastic material.

7. A method as claimed in one of the preceding claims, **characterised in that** the thickness of the removed surface layer is the same as the thickness of the new coating (10).

8. A method as claimed in one of the preceding claims, **characterised in that** the coating is effected by spraying or pouring.

9. A method as claimed in one of the preceding claims, **characterised in that** the coating is effected in the form of a liquid lacquer application.

10. A method as claimed in one of the preceding claims, **characterised in that** the coating (10) has a lower melting temperature than the formwork panel (1) or at least of its surface.

11. A method as claimed in one of the preceding claims, **characterised in that** the coating (10) is effected at a temperature which activates the surface of the formwork panel (1).

12. A method as claimed in one of the preceding claims, **characterised in that** the coating (10) adhesively unites with the formwork panel (1).

13. A method as claimed in one of the preceding claims, **characterised in that** the formwork panel (1) includes a frame (6) and that the formwork panel (1) remains in the frame (6) for the repair.

14. A method as claimed in one of the preceding claims, **characterised in that** the formwork panel (1) has a frame (6) and that the coating (10) is effected flush with the frame (6) and any potential gap (9) between the formwork panel (1) and the frame (6) is closed with the coating (10).

## Revendications

1. Procédé pour réparer la surface (5) d'un panneau de coffrage (1) qui est un panneau en composite stratifié, **caractérisé par** les étapes suivantes :
- élimination par usinage destructif d'une partie de l'épaisseur d'une couche extérieure (4) du panneau de coffrage (1) en composite stratifié,
- nouveau revêtement du panneau de coffrage (1).

2. Procédé selon la revendication 1, **caractérisé en ce que** la qualité de surface du panneau de coffrage (1) est améliorée par l'élimination de la couche superficielle.

3. Procédé selon la revendication 1 ou 2, **caractérisé en ce que** la couche superficielle est éliminée par enlèvement de matière.

4. Procédé selon l'une des revendications 1 à 3, **caractérisé en ce que** le revêtement (10) compense des défauts superficiels du panneau de coffrage (1).

5. Procédé selon l'une des revendications 1 à 4, **caractérisé en ce que** le panneau de coffrage (1) présente une surface en matière plastique, constituée par exemple d'une matière thermoplastique.

6. Procédé selon l'une des revendications précédentes, **caractérisé en ce que** le revêtement (10) s'effectue avec une matière thermoplastique.

7. Procédé selon l'une des revendications précédentes, **caractérisé en ce que** l'épaisseur de la couche superficielle éliminée est égale à l'épaisseur du nouveau revêtement (10).

8. Procédé selon l'une des revendications précédentes, **caractérisé en ce que** le revêtement s'effectue par injection ou par coulée.

9. Procédé selon l'une des revendications précédentes, **caractérisé en ce que** le revêtement s'effectue par l'application d'un vernis liquide.

10. Procédé selon l'une des revendications précédentes, **caractérisé en ce que** le revêtement (10) présente une température de fusion inférieure à celle du panneau de coffrage (1) ou au moins de la surface de ce dernier.

11. Procédé selon l'une des revendications précédentes, **caractérisé en ce que** le revêtement (10) s'effectue à une température qui active la surface du panneau de coffrage (1).

12. Procédé selon l'une des revendications précédentes, **caractérisé en ce que** le revêtement (10) se lie par liaison de matière au panneau de coffrage (1).

13. Procédé selon l'une des revendications précédentes, **caractérisé en ce que** le panneau de coffrage (1) présente un cadre (6), et **en ce que** le panneau de coffrage (1) reste dans le cadre (6) pour la réparation.

14. Procédé selon l'une des revendications précédentes, **caractérisé en ce que** le panneau de coffrage (1) présente un cadre (6) et **en ce que** le revêtement (10) s'effectue à fleur du cadre (6), et un interstice éventuel (9) entre le panneau de coffrage (1) et le cadre (6) est fermé par le revêtement (10).
